# EUROPÄISCHE PATENTSCHRIFT

(11) **EP 3 999 920 B1**
(45) Veröffentlichungstag und Bekanntmachung des Hinweises auf die Patenterteilung: **28.08.2024**
(21) Anmeldenummer: 20771539.2
(22) Anmeldetag: 10.09.2020
(51) Int. Cl.: G05B 19/042

(54) **SYSTEM MIT EINER STEUERUNG UND MIT EINEM AKTOR SOWIE MIT EINER BAUGRUPPE ZUR BEREITSTELLUNG VON FUNKTIONALER SICHERHEIT**
SYSTEM HAVING A CONTROLLER AND HAVING AN ACTUATOR AND ALSO HAVING AN ASSEMBLY FOR PROVIDING FUNCTIONAL SAFETY
SYSTÈME AYANT UN DISPOSITIF DE COMMANDE ET UN ACTIONNEUR AINSI QU'UN ENSEMBLE PERMETTANT D'ASSURER UNE SÉCURITÉ FONCTIONNELLE

(30) Priorität: 17.09.2019 DE 102019214118; 21.10.2019 DE 102019216196
(43) Veröffentlichungstag der Anmeldung: 25.05.2022
(73) Patentinhaber: Ellenberger & Poensgen GmbH, 90518 Altdorf (DE)
(72) Erfinder: PREM, Tobias, 92283 Lauterhofen (DE); SCHMIDT, Philipp, 90461 Nürnberg (DE)
(74) Vertreter: FDST Patentanwälte
(86) Internationale Anmeldenummer: PCT/EP2020/075364
(87) Internationale Veröffentlichungsnummer: WO 2021/052861

(56) Entgegenhaltungen:
- EP-A1- 2 590 036
- EP-B1- 2 590 036
- DE-A1- 102017 202 846

## Beschreibung

Die Erfindung betrifft ein System mit einer Steuerung und mit einem Aktor sowie mit einer Baugruppe. Die Baugruppe dient der Bereitstellung von funktionaler Sicherheit und umfasst eine Schalteinheit und ein Steuergerät.

Anlagen, wie Industrieanlagen, weisen üblicherweise einen oder mehrere Aktoren auf, mittels derer eine Tätigkeit durchgeführt wird. Bei einer Industrieanlage erfolgt mittels des Aktors beispielsweise eine Erstellung und/oder Bearbeitung eines Werkstücks. Damit der Aktor entsprechend der gewünschten Funktion betrieben wird, ist eine Steuerung vorgesehen, mittels derer eine Bestromung des Aktors eingestellt wird. Im einfachsten Fall ist hierbei ein Schalter vorhanden, der mittels der Steuerung betätigt wird. Mittels des Schalters erfolgt dabei ein Einschalten sowie Ausschalten des Aktors. Hierfür ist der Schalter in eine elektrische Versorgungsleitung des Aktors eingebracht. Der Schalter, die Steuerung und der Aktor bilden hierbei ein System.

Falls mittels des Aktors Funktionen durchgeführt werden, die zu einer Gefährdung von weiteren Maschinen und/oder Bedienpersonal führen könnten, ist es erforderlich, dass eine funktionelle Sicherheit bereitgestellt wird. So soll in einem Notfall die bestimmungsgemäße Funktion des Aktors eingestellt und ein sicherer Zustand eingenommen werden. Je nach gewünschtem Sicherheitslevel ist dabei eine Berücksichtigung von möglichen Fehlern des Systems erforderlich. Hierbei wird meist auch ein möglicher Ausfall von einzelnen Bestandteilen des Systems berücksichtigt, also beispielsweise des Schalters. Daher ist es erforderlich, in die Versorgungsleitung einen weiteren Schalter einzubringen, der ebenfalls mittels der Steuerung betätigt wird, und der als Rückfalllösung dient. Da es zudem auch möglich ist, dass übermäßige elektrische Spannungs- und/oder Stromschwankungen in einem die Versorgungsleitung aufweisenden Versorgungsnetzwerk auftreten, oder dass der Aktor ein Fehlverhalten aufweist, ist es erforderlich, einen Schutzschalter in die Versorgungsleitung einzubringen, der somit als Leitungsschutzschalter und/oder als Geräteschutzschalter dient. Meist wird dieser hierbei ebenfalls mit der Steuerung betätigt.

Somit sind insgesamt drei einzelne Komponenten mittels der Steuerung zu betätigen, damit das gewünschte Sicherheitslevel realisiert wird. Hierbei ist es erforderlich, die einzelnen Komponenten untereinander entsprechend zu verschalten, was zu einer erhöhten Montagezeit führt. Auch wird eine vergleichsweise große Anzahl an unterschiedlichen Leitungen/Kabeln benötigt, weswegen Herstellungskosten erhöht sind. Zudem ist es erforderlich, die einzelnen Komponenten aufeinander auf den angedachten Anwendungsfall abzustimmen.

Falls eine der Komponenten eine entsprechende Anforderung nicht erfüllt, erfüllt die vollständige Anlage mit dem System nicht das gewünschte Sicherheitslevel und darf somit nicht betrieben werden. Folglich ist auch bei Konzeption des Systems ein Abstimmen der einzelnen Komponenten aufeinander erforderlich, was zu einer verlängerten Projektionszeit und somit auch zu erhöhten Herstellungskosten führt.

Falls die Anlage und das System mehrere Aktoren aufweisen, ist für jeden dieser Aktoren eine entsprechende Anzahl an Schalter sowie eine entsprechende Verkabelung erforderlich. Da hierbei jeder der Schalter mittels der Steuerung betätigt wird, ist an dieser eine vergleichsweise große Anzahl an Schnittstellen für die Schalter vorzusehen, weswegen Herstellungskosten sowie ein benötigter Platz übermäßig erhöht sind.

Aus EP 2 590 036 A1 ist ein Sicherheitsschaltgerät bekannt, mittels dessen ein elektrischer Verbraucher sicher ausgestaltet werden soll. Hierbei ist vorgesehen, im Gefahrenfalle die Funktion des elektrischen Verbrauchers zu unterbrechen oder zu beeinflussen, wofür Sicherheitsschalter vorgesehen sind.

Aus DE 10 2017 202 846 A1 ist ein Steuergerät eines Kraftfahrzeugs bekannt. Bei diesem sind Halbleiterschalter vorgesehen.

Der Erfindung liegt die Aufgabe zugrunde, ein besonders geeignetes System mit einer Steuerung und mit einem Aktor sowie mit einer Baugruppe anzugeben, wobei vorteilhafterweise eine Herstellung vereinfacht und zweckmäßigerweise eine Montagezeit und/oder Herstellungskosten verringert sind, und wobei insbesondere eine Sicherheit erhöht ist.

Hinsichtlich des Systems wird diese Aufgabe durch die Merkmale des Anspruchs 1 erfindungsgemäß gelöst. Vorteilhafte Weiterbildungen und Ausgestaltungen sind Gegenstand der Unteransprüche.

Das System ist beispielsweise ein Bestandteil einer Anlage, mittels derer eine bestimmte Funktion ausgeführt wird. Insbesondere ist die Anlage eine Industrieanlage und dient beispielsweise der Herstellung und/oder Bearbeitung eines bestimmten Werkstücks. Das System weist eine Steuerung sowie einen Aktor auf. Der Aktor ist beispielsweise ein Elektromotor, der zum Beispiel ein rotierender Elektromotor oder ein Linearmotor ist. Alternativ hierzu ist beispielsweise der Aktor ein Ventil, das elektrisch betätigt ist. Der Aktor weist eine Versorgungsleitung auf, mittels derer eine Versorgung mit elektrischer Energie erfolgt. Im Montagezustand ist die Versorgungsleitung elektrisch mit einem Versorgungsnetzwerk kontaktiert, das beispielsweise eine elektrische Gleich- oder Wechselspannung bereitstellt. Hierfür ist die Versorgungsleitung geeignet und zweckmäßigerweise vorgesehen und eingerichtet. Bei Betrieb wird mittels der Versorgungsleitung beispielsweise ein elektrischer Strom zwischen 0,5 A und 20 A, zwischen 1 A und 15 A oder 2 A und 10 A im Normalfall geführt. Insbesondere ist dabei die elektrische Versorgungsleitung auf einem elektrischen Potential, das zu Masse eine elektrische Spannung größer als 10 V, 20 V oder 100 V aufweist. Beispielsweise ist die elektrische Spannung kleiner als 10 kV, 5 kV oder 1 kV. Insbesondere ist die elektrische Spannung eine Gleichspannung oder eine Wechselspannung.

Die Steuerung ist beispielsweise mittels eines Computers bereitgestellt und insbesondere eine speicherprogrammierbare Steuerung. In der Steuerung sind Prozessparameter zur Ansteuerung des Aktors hinterlegt, wobei der Aktor, sofern dieser entsprechend der Prozessparameter betrieben wird, eine gewünschte Funktion ausführt.

Ferner weist das System eine Baugruppe auf, die der Bereitstellung von funktionaler Sicherheit dient. Mit anderen Worten wird mittels der Baugruppe sichergestellt, dass eine Sicherheitsintegrität des Systems gewährleistet ist. Insbesondere erfolgt hierbei eine Gewährleistung eines bestimmten Sicherheitslevels mittels der Baugruppe. Die Baugruppe umfasst eine Schalteinheit sowie ein Steuergerät. Die Schalteinheit ist in die elektrische Versorgungsleitung des Aktors eingebracht, und mittels der Schalteinheit ist es somit möglich, einen elektrischen Stromfluss über die elektrische Versorgungsleitung zu unterbrechen sowie einzustellen. Insbesondere weist die Schalteinheit ein Gehäuse auf, innerhalb derer sämtliche weiteren Komponenten der Schalteinheit angeordnet sind. Vorzugsweise weist eine der Wände des Gehäuses einen Anschluss an die Versorgungsleitung auf. Mit anderen Worten ragt der Anschluss durch das Gehäuse hindurch, sodass die Versorgungsleitung an der Schalteinheit angeschlossen werden kann. Der Anschluss geht insbesondere in einen innerhalb des Gehäuses angeordneten Strang der Schalteinheit über.

Die Schalteinheit ist mittels des Steuergeräts der Baugruppe betrieben. Mit anderen Worten erfolgt eine Betätigung der Schalteinheit mittels des Steuergeräts. Beispielsweise wird hierbei mittels des Steuergeräts ein Versorgungsstrom/ Versorgungsspannung der Schalteinheit direkt eingestellt. Besonders bevorzugt jedoch erfolgt bei Betrieb ein Übertragen von Befehlen von dem Steuergerät zu der Schalteinheit, die mittels der Schalteinheit ausgewertet werden. Somit ist ein erforderlicher Verkabelungsaufwand zwischen dem Steuergerät und der Schalteinheit verringert. Das Steuergerät ist signaltechnisch mit der Steuerung verbunden. Insbesondere erfolgt hierbei die signaltechnische Verbindung des Aktors mit der Steuerung über die Baugruppe, und eine direkte Verbindung der Steuerung mit dem Aktor ist zweckmäßigerweise nicht vorhanden. Zum Betrieb des Aktors wird somit von der Steuerung ein entsprechendes Signal an das Steuergerät der Baugruppe übermittelt, mittels dessen die Schalteinheit entsprechend betrieben wird.

Somit ist zur Herstellung des Systems lediglich eine Verbindung der Baugruppe mit dem Aktor, nämlich das Einbringen in die elektrische Versorgungsleitung, und der Steuerung mit der Baugruppe erforderlich, weswegen eine Herstellung vereinfacht ist. Zusammenfassend existieren lediglich vergleichsweise wenige Verbindungen zwischen den Komponenten des Systems, weswegen eine Montagezeit sowie Herstellungskosten verringert sind. Auch ist ein Platzbedarf verringert. Da zudem mittels der Baugruppe die funktionale Sicherheit bereitgestellt wird, ist ein Abstimmen von einzelnen Komponenten der Baugruppe untereinander nicht erforderlich, weswegen eine fehlerhafte Abstimmung einzelner Komponenten des Systems vermieden und somit eine Sicherheit erhöht ist. Auch ist somit gewährleistet, dass ein bestimmter Sicherheitslevel realisiert wird, nämlich der, der mittels der Baugruppe bereitgestellt wird. Bei Betrieb wird insbesondere mittels der Steuerung Prozessparameter und/oder Anweisungen an die Baugruppe übertragen und dort mittels des Steuergeräts empfangen. In Abhängigkeit hiervon wird die Schalteinheit betätigt, sodass der Aktor entsprechend der Prozessparameter betrieben wird.

Zum Beispiel weist die Anlage mehrere derartige Baugruppen auf, die jeweils mittels der Steuerung signaltechnisch verbunden sind. Jeder der Baugruppen ist vorzugsweise zumindest ein Aktor zugeordnet, der mittels der jeweiligen Baugruppe mittels der jeweiligen Schalteinheit betrieben ist. Hierbei sind die Aktoren und/oder die Baugruppen untereinander bevorzugt nicht direkt, sondern stets über die Steuerung verbunden, was einen Verkabelungsaufwand verringert und eine Austauschbarkeit erhöht.

Insbesondere wird mittels der Baugruppe ein bestimmter Sicherheitslevel gewährleistet. Falls somit der Sicherheitslevel des Systems verändert werden soll, ist es insbesondere lediglich erforderlich, die Baugruppe auszutauschen, wofür lediglich eine bestimmte Anzahl an Leitungen oder dergleichen neu angeschlossen werden muss. Somit ist ein Aufwand zur Erhöhung oder Veränderung des Sicherheitslevels verringert. Auch ist es hierbei nicht erforderlich, einzelne Komponenten entsprechend aufeinander abzustimmen, da mittels der Baugruppe dies bereits erfolgt ist. Beispielsweise umfasst die Baugruppe zusätzlich eine Stromversorgung. Mittels dieser erfolgt bei Betrieb insbesondere eine Versorgung des Steuergeräts und/oder der Schalteinheit sowie etwaige weitere Komponenten der Baugruppe. Somit ist eine Ausfallsicherheit weiter erhöht. Auch ist es bei der Herstellung des Steuergeräts nicht erforderlich, auf einen bestimmten Funktionsumfang zu verzichten, beispielsweise weil die benötigte zur Verfügung gestellt elektrische Energie hierfür nicht ausreicht.

Beispielsweise weist die Schalteinheit, geeigneterweise der etwaige Strang, lediglich einen einzigen Schalter auf. Besonders bevorzugt jedoch umfasst die Schalteinheit, geeigneterweise der etwaige Strang, eine Anzahl an elektrisch in Reihe geschalteten Schaltelementen, die in die Versorgungsleitung eingebracht sind. Somit sind insbesondere 2, 3, 4 oder mehr Schaltelemente vorhanden. Bei Öffnen eines der Schaltelemente wird der elektrische Stromfluss über die Versorgungsleitung unterbrochen. Somit ist auch dann, wenn eines der Schaltelemente ausfällt, immer noch eine Unterbrechung des elektrischen Stromflusses ermöglicht, was eine Sicherheit weiter erhöht.

Zumindest eines der Schaltelemente, vorzugsweise zwei oder mehr der Schaltelemente, sind geeigneterweise als mechanischer Schalter ausgestaltet, also als elektromechanischer Schalter. Mittels Anlegens einer entsprechenden elektrischen Spannung an den mechanischen Schalter erfolgt ein Öffnen/Schließen von diesem. Insbesondere ist der mechanische Schalter als Relais oder Schütz ausgestaltet. Beispielsweise ist einer der mechanischen Schalter als Relais und der andere als Schütz ausgestaltet, oder beide mechanischen Schalter sind als Schütz oder beide mechanischen Schalter sind als Relais ausgeschaltet. Aufgrund der mechanischen Schalter erfolgt insbesondere bei Öffnen eine galvanische Trennung, weswegen eine Sicherheit weiter erhöht ist. Hierbei dient insbesondere die Schalterstrecke oder ein sonstiger Bestandteil als physikalischer Isolator. Geeigneterweise wird zwischen die etwaigen sich öffnenden Kontakte des mechanischen Schalters ein elektrischer Isolator eingebracht, beispielsweise aus einem Kunststoff oder einer Keramik. Zusammenfassend ist somit ein zusätzlicher physikalischer Isolator vorhanden. Somit wird ein Überspringen eines Funkens und/oder eine Ausbildung eines Lichtbogens zwischen den geöffneten Kontakten vermieden, was eine Sicherheit weiter erhöht. Sofern der mechanische Schalter als Relais ausgebildet ist, ist dieses zweckmäßigerweise ein monostabiles Relais. Dieses ist vorzugsweise in Schließerkonfiguration ausgebildet ("normally open"). Somit ist zum Schließen des mechanischen Schalters eine aktive Ansteuerung erforderlich. In einem Fehlerfall und/oder bei unterbrochener Stromversorgung ist der mechanische Schalter somit geöffnet, was eine Sicherheit erhöht.

Alternativ oder besonders bevorzugt in Kombination hierzu ist zumindest eines der Schaltelemente ein Halbleiterschalter, beispielsweise ein Feldeffekttransistor. Vorzugsweise ist der Halbleiterschalter ein Leistungshalbleiterschalter, wie ein MOSFET, IGBT oder GTO. Bei dem Halbleiterschalter tritt bei Betätigung kein Lichtbogen auf, sodass eine Sicherheit erhöht ist. Der Halbleiterschalter ist zweckmäßigerweise selbstsperrend. Folglich ist ein Stromführen mittels des Halbleiterschalters lediglich im angesteuerten Zustand möglich. Daher ist ein Stromfluss über den Halbleiterschalter bei einer defekten Ansteuerung, und somit in einem Fehlerfall, und/oder bei unterbrochener Stromversorgung ausgeschlossen, was eine Sicherheit erhöht. Zweckmäßigerweise ist der Halbleiterschalter monostabil ausgestaltet.

Vorzugsweise ist sowohl der Halbleiterschalter als auch zumindest ein mechanischer Schalter vorhanden. Hierbei wird bei einer Betätigung der Schalteinheit, wenn diese in den elektrisch nicht leitenden Zustand überführt wird, zweckmäßigerweise zunächst der Halbleiterschalter und im Anschluss hieran der mechanische oder die mechanischen Schalter geöffnet. Somit tritt kein Lichtbogen bei den mechanischen Schaltern auf, was eine Beschädigung verhindert. Auch ist eine Wärmeentwicklung verringert. Somit ist es möglich, mittels der Schalteinheit eine vergleichsweise große Anzahl an Schaltvorgängen durchzuführen. Bei Überführen der Schalteinheit in den elektrisch leitenden Zustand werden zweckmäßigerweise zunächst sämtliche mechanischen Schalter und im Anschluss hieran der Halbleiterschalter betätigt. Somit ist auch in diesem Fall das Ausbilden eines Lichtbogens oder dergleichen verhindert, was einen Verschleiß verringert.

Zweckmäßigerweise weist die Schalteinheit eine Strombegrenzung auf, mittels derer ein mittels der Schalteinheit maximal geführter elektrischer Strom begrenzt ist. Die Strombegrenzung ist zweckmäßigerweise aktiv ausgestaltet, sodass der Stromfluss über eine bestimmte Zeitspanne, beispielsweise unbegrenzt, mit dem maximal geführten elektrischen Strom aufrechterhalten wird bzw. werden kann. Ein Überschreiten des maximal geführten elektrischen Stroms hingegen ist im Wesentlichen nicht möglich. Insbesondere ist der Wert des maximal geführten elektrischen Stroms auf den aktuellen Anwendungsfall abgestimmt. Vorzugsweise ist die Strombegrenzung mittels eines Halbleiters realisiert, dessen elektrischer Widerstand mit zunehmendem elektrischem Strom steigt, wobei der Anstieg zweckmäßigerweise nichtlinear erfolgt. Vorzugsweise wird der etwaig vorhandene Halbleiterschalter als Strombegrenzung verwendet, und der Halbleiterschalter ist entsprechend ausgestaltet. So wird insbesondere bei Annähen an den maximal mittels der Schalteinheit zu führenden elektrischen Strom der ohmsche Widerstand des Halbleiterschalters vergrößert, vorzugsweise im Wesentlichen schlagartig. Beispielsweise ist der maximal aufgrund der Strombegrenzung führbare elektrische Strom zwischen 8 A und 12 A oder zwischen 9 A und 11 A. Aufgrund der Strombegrenzung ist somit auch in einem Fehlerfall, beispielsweise bei einem Kurzschluss in dem Aktor, eine Sicherheit erhöht und eine zu erwartende Zerstörung oder weitere Beschädigung verringert.

Besonders bevorzugt umfasst die Schalteinheit eine elektrische Sicherung, die elektrisch in Reihe mit dem oder den Schaltelementen geschaltet ist, und die somit ebenfalls in die Versorgungsleitung eingebracht ist. Die Sicherung ist insbesondere unabhängig von der Verwendung und/oder Ausgestaltung der Schaltelemente und zweckmäßigerweise stets in die Versorgungsleitung eingebracht. Insbesondere ist die Sicherung als Schmelzsicherung ausgestaltet, beispielsweise als sogenannte Glasrohrsicherung oder dergleichen. Bei einem übermäßigen elektrischen Strom erfolgt mittels der Sicherung ein Unterbrechen des elektrischen Stromflusses über die Schalteinheit, sodass die Sicherung als "Fail Safe"-Element wirkt. Bei einem vergleichsweise umfangreichen Ausfall von einzelnen Komponenten des Systems, beispielsweise auch von einzelnen Bestandteilen der Schalteinheit, wird mittels der Sicherung sichergestellt, dass der Betrieb des Aktors unterbrochen wird. Somit ist eine Sicherheit erhöht. In einer Alternative wird anstatt der Sicherung ein oder mehrere Schutzschalter verwendet.

Beispielsweise werden sämtliche Schaltelemente mittels des Steuergeräts betätigt, mittels dessen eine entsprechende Versorgungsspannung an die einzelnen Schaltelemente angelegt wird. Besonders bevorzugt jedoch weist die Schalteinheit eine Steuereinheit auf, mittels derer das Schaltelement bzw. die Schaltelemente betätigt sind. Hierbei wird mittels des Steuergeräts entsprechende Signale zu der Steuereinheit übermittelt, mittels derer die Schaltelemente entsprechend betätigt werden. Mittels der Steuereinheit wird hierfür zweckmäßigerweise an die Schaltelemente eine entsprechende Versorgungsspannung angelegt. Somit ist ein Verkabelungsaufwand weiter verringert. Zweckmäßigerweise weist die Steuereinheit zwei Teile auf, die zueinander redundant aufgebaut sind. Hierbei ist mittels jedes der Teile eine entsprechende Ansteuerung der Schaltelemente ermöglicht. Folglich ist auch bei einem Ausfall eines der Teile der Steuereinheit ein weiterer Betrieb möglich, was eine Sicherheit weiter erhöht. Beispielsweise sind die beiden Teile zueinander gleich aufgebaut oder besonders bevorzugt unterschiedlich. Insbesondere werden hierbei unterschiedliche Hersteller für die einzelnen Bauteile herangezogen, sodass bei einer fehlerhaften Fertigung der Bauteile eines der Teile, insbesondere Mikroprozessor, mit dem anderen Teil ein Weiterbetrieb möglich ist.

Besonders bevorzugt sind die Schaltelemente derart ausgestaltet, dass diese eine Rückmeldung abgeben, in welchem Schaltzustand sie sich befinden. Sofern das jeweilige Schaltelement ein mechanischer Schalter/Relais ist, umfasst dieses zweckmäßigerweise Hilfskontakte, die der Rückmeldung dienen. So sind die Hilfskontakte beispielsweise stets dann elektrisch miteinander kontaktiert, wenn ein Stromfluss über das jeweilige Schaltelement möglich ist. Falls der Stromfluss nicht möglich ist, sind zweckmäßigerweise auch die Hilfskontakte zueinander getrennt, oder jeweils umgekehrt. Die Hilfskontakte sind vorzugsweise zwangsgeführt und zum Beispiel als sogenannte Spiegelkontakte ausgestaltet. Falls das jeweilige Schaltelement als Halbleiterschalter ausgestaltet ist, wird beispielsweise das an einem Gate anliegende Signal (Gate-Signal) als Rückmeldung verwendet. In einer Weiterbildung wird zusätzlich anhand eines Stromflusses über den Halbleiterschalter und/oder eines Isoliervermögens des Halbleiterschalters die Rückmeldung abgeleitet. In einer Alternative wird zur Rückmeldung der über den Halbleiterschalter fließende elektrische Strom erfasst, beispielsweise gemessen. Alternativ oder in Kombination wird die anliegende elektrische Spannung erfasst, beispielsweise gemessen. Zusammenfassend wird die Funktion des Halbleiterschalters überwacht ("Monitoring").

Die Rückmeldung wird beispielsweise mittels des Steuergeräts direkt ausgelesen. Besonders bevorzugt ist hierbei die Steuereinheit oder eine weitere Steuereinheit vorhanden, mittels derer der entsprechende Zustand der Schaltelemente ausgelesen wird. Der Zustand wird vorzugsweise als Signal zu dem Steuergerät übertragen. Somit ist ein Verkabelungsaufwand weiter verringert. Auch ist aufgrund des Auslesens des Zustands der Schaltelemente ein Rückschluss auf den aktuellen Zustand des Aktors möglich. Alternativ oder besonders bevorzugt in Kombination hierzu weist die Schalteinheit einen Sensor auf, mittels dessen der mittels der Schalteinheit geführte elektrische Strom und/oder die anliegende elektrische Spannung erfasst wird. Mit anderen Worten umfasst die Schalteinheit einen Stromsensor und/oder einen Spannungssensor. Vorzugsweise wird dieser Sensor ebenfalls mit der Steuereinheit ausgelesen, und in Abhängigkeit hiervon wird beispielsweise eines der Schaltelemente oder mehrere der Schaltelemente betätigt. Vorzugsweise erfolgt die Betätigung in Abhängigkeit eines Überschreitens eines Grenzwerts durch die anliegende elektrische Spannung und/oder den damit geführten elektrischen Strom und/oder in Abhängigkeit einer Änderung des elektrischen Stroms/der elektrischen Spannung innerhalb einer bestimmten Zeitspanne. Somit nimmt die Schalteinheit zusätzlich die Funktion eines Schutzschalters war, insbesondere eines Leitungsschutzschalters oder Geräteschutzschalters. Somit ist eine Sicherheit weiter erhöht.

Vorzugsweise umfasst der Aktor eine Masseleitung, die bei Betrieb als elektrisches Potential Masse, insbesondere Erde, aufweist. Beispielsweise ist ein Gehäuse des Aktors elektrisch mit der Masseleitung kontaktiert, sodass ein Berührschutz realisiert ist. Vorzugsweise umfasst die Schalteinheit ein zusätzliches Schaltelement, das in die Masseleitung des Aktors eingebracht ist. Somit wird auch die Masseleitung über die Schalteinheit geführt. Bei Betrieb wird das zusätzliche Schaltelement insbesondere ebenfalls mittels der etwaigen Steuereinheit betätigt. Aufgrund des zusätzlichen Schaltelements ist es somit möglich, auch die Masseleitung elektrisch zu unterbrechen und somit den Aktor sowohl elektrisch von Masse als auch von dem elektrischen Potential, gegen das die Versorgungsleitung geführt ist, zu trennen. Somit ist eine Sicherheit erhöht. In einer alternativen Ausgestaltung ist das zusätzliche Schaltelement nicht vorhanden und somit die Masseleitung insbesondere unversehrt. Zum Beispiel wird die Masseleitung zumindest teilweise mittels der Schalteinheit bereitgestellt, oder die Masseleitung ist kein Bestandteil der Schalteinheit.

Beispielsweise sind in die Masseleitung mehrere derartige zusätzliche Schaltelemente eingebracht, was eine Sicherheit erhöht. Beispielsweise ist zumindest eines der zusätzlichen Schaltelemente als mechanischer Schalter ausgestaltet, und ein weiteres der zusätzlichen Schaltelemente ist als Halbleiterschalter ausgestaltet. Vorzugsweise ist jedoch lediglich ein einziges zusätzliches Schaltelement vorhanden, was Herstellungskosten reduziert. Vorzugsweise ist dieses als mechanischer Schalter ausgestaltet, sodass eine galvanische Trennung und daher eine elektrische Isolation bei Öffnen des zusätzlichen Schaltelements erfolgt.

Zweckmäßigerweise weist das System einen weiteren Aktor auf, der beispielsweise baugleich zu dem Aktor ist. Insbesondere wirken die beiden Aktoren zusammen, sodass diese mittels der Steuerung aufeinander abgestimmt betrieben werden. Alternativ hierzu sind die beiden Aktoren beispielsweise zueinander unabhängig, und mittels jedes der Aktoren erfolgt beispielsweise eine Bearbeitung/Erstellung eines unterschiedlichen Werkstücks. Der weitere Aktor weist eine weitere Versorgungsleitung auf.

Insbesondere weist die Schalteinheit eine Anzahl an elektrisch in Reihe geschalteten weiteren Schaltelementen auf, die in die weitere Versorgungsleitung eingebracht sind. Somit wird mittels der Schalteinheit auch der elektrische Strom geführt, mittels dessen der weitere Aktor bestromt wird. Beispielsweise sind die weiteren Schaltelemente im Wesentlichen baugleich zu den etwaig vorhandenen Schaltelementen, sodass die Schalteinheit zwei zueinander baugleiche Stränge aufweist, wobei der eine der Stränge der Versorgungsleitung und der weitere Strang der weiteren Versorgungsleitung zugeordnet ist. Insbesondere ist hierbei eine weitere Sicherung vorhanden, die in die weitere Versorgungsleitung eingebracht ist. Sofern die Steuereinheit vorhanden ist, sind zweckmäßigerweise ebenfalls die weiteren Schaltelemente ebenfalls mittels dieser betätigt. Mit anderen Worten weist die Schalteinheit lediglich eine einzige Steuereinheit auf, mittels derer sämtliche Schaltelemente oder dergleichen betätigt sind, und/oder mittels derer sämtliche etwaigen Sensoren, von denen jedem der Stränge zumindest jeweils einer vorzugsweise zugeordnet ist, ausgelesen werden. Somit sind Hardwareanforderungen verringert. In einer Weiterbildung wird anstatt der weiteren Sicherung ein entsprechender Schutzschalter verwendet.

In einer Alternative hierzu weist die Baugruppe eine weitere Schalteinheit auf, die baugleich zu der Schalteinheit ist. Die weitere Schalteinheit ist jedoch in die weitere Versorgungsleitung eingebracht, sodass mittels der weiteren Schalteinheit der mittels der weiteren Versorgungsleitung geführte elektrische Strom unterbrochen werden kann. Ferner ist die weitere Schalteinheit mittels des Steuergeräts betrieben. Mittels des Steuergeräts sind somit sowohl die Schalteinheit als auch die weitere Schalteinheit betrieben. Aufgrund der weiteren Schalteinheit ist ein modularer Aufbau des Systems realisiert, sodass eine vergleichsweise große Anzahl an weiteren Aktoren mittels des Systems betrieben werden kann. Vorzugsweise sind somit mehrere weitere Aktoren vorhanden. Beispielsweise ist ein Teil hiervon jeweils einer der weiteren Schalteinheiten zugeordnet, wobei beispielsweise der Schalteinheit oder den weiteren Schalteinheiten jeweils weitere Schaltelemente zugeordnet sind. Mit anderen Worten werden mit jeder der Schalteinheiten der Baugruppe zumindest zwei oder mehrere der Aktoren betrieben. Somit ist eine Anzahl an Schalteinheiten insgesamt verringert.

Das Steuergerät und die Schalteinheit sind vorzugsweise lediglich signaltechnisch miteinander verbunden, sodass zwischen diesen lediglich Signale ausgetauscht werden. Diese weisen zweckmäßigerweise lediglich ein bestimmtes elektrisches Spannungsniveau auf, weswegen eine Verarbeitung erweitert ist. Vorzugsweise sind das Steuergerät und die Schalteinheit mittels eines ersten Bussystems signaltechnisch verbunden. Hierbei ist das Steuergerät zweckmäßigerweise als ein Master des ersten Bussystems konfiguriert. Die Schalteinheit ist somit ein Slave. Falls die mehreren derartigen Schalteinheiten, also beispielsweise die weitere Schalteinheit, vorhanden sind, sind diese insbesondere sämtliche als Slave ausgebildet. Da die Baugruppe lediglich ein einziges Steuergerät aufweist, das stets vorhanden ist, ist eine eindeutige Identifizierung des Masters erleichtert. Auch ist es somit möglich, eine vergleichsweise große Anzahl an separaten Schalteinheiten zu verwenden. Die Schalteinheit ist insbesondere mit der etwaigen Steuereinheit signaltechnisch verbunden, sofern diese vorhanden ist.

Vorzugsweise weist das Steuergerät und/oder die Schalteinheit mehrere Anschlüsse auf, von denen jeder mit jeweils einer entsprechenden Leitung des ersten Bussystems verbunden ist. Somit ist eine Redundanz der signaltechnischen Verbindung realisiert. Vorzugsweise genügt das erste Bussystem einem Profibus, Profinet, Ethercat, Ethernet IP oder IO Link-Standard, wobei geeigneterweise sicherheitsrelevante Funktionen unterstützt werden, wofür insbesondere eine Safety-Layer bereitgestellt wird. Vorzugsweise wird somit als Busstandard für das erste Bussystem Profisave, Safety over Ethercat (FSoE), Safety over IO-Link bzw. CIP Safety verwendet. Insbesondere erfolgt hierbei eine aufeinander aufbauende Kommunikation, sodass bei jedem verschickten Telegramm insbesondere ein das vorhergehende Telegramm kennzeichnender Wert mit verarbeitet wird. Somit wird sichergestellt, dass die Telegramme, die mittels des ersten Bussystems ausgetauscht werden, von jedem der Teilnehmer des ersten Bussystems, also dem Master und den Slaves, korrekt empfangen.

Alternativ oder besonders bevorzugt in Kombination hierzu sind das Steuergerät und die Steuerung mittels eines zweiten Bussystems signaltechnisch verbunden.

Hierbei ist beispielsweise das Steuergerät als ein Slave des zweiten Bussystems konfiguriert, und die Steuerung ist zweckmäßigerweise als der Master des zweiten Bussystems konfiguriert. Somit ist ebenfalls ein modularer Aufbau gegeben, sodass mehrere Baugruppen verwendet werden können. Hierbei ist zweckmäßigerweise jedes Steuergerät der Baugruppen als Slave ausgebildet. Vorzugsweise genügt das zweite Bussystem einem Profibus, Profinet, Ethercat, Ethernet IP oder IO Link-Standard, wobei geeigneterweise sicherheitsrelevante Funktionen unterstützt werden, wofür insbesondere eine Safety-Layer bereitgestellt wird. Vorzugsweise wird somit als Busstandard für das erste Bussystem Profisave, Safety over Ethercat (FSoE), Safety over IO-Link bzw. CIP Safety verwendet. Geeigneterweise weisen das Steuergerät und die Steuerung jeweils mehrere Anschlüsse auf, die jeweils unterschiedlichen, zueinander parallelen Leitungen zugeordnet sind. Somit erfolgt auch eine redundante signaltechnischen Verbindung des Steuergeräts mit der Steuerung.

Besonders bevorzugt ist sowohl das erste als auch das zweite Bussystem vorhanden. Da hierbei die Verbindung der Schalteinheit mit dem Steuergerät mittels des ersten Bussystems erfolgt, ist in der Steuerung ein genaues Wissen um den Aufbau der Schalteinheit nicht erforderlich. Auch ist eine Anzahl an Teilnehmern in dem zweiten Bussystem verringert, da der Schalteinheit, insbesondere der etwaigen Steuereinheit, in dem zweiten Bussystem keine Adresse zugewiesen ist, sondern lediglich in dem ersten Bussystem. Somit ist es möglich, eine Zykluszeit in dem zweiten Bussystem und auch in dem ersten Bussystem zu erhöhen, und somit eine Geschwindigkeit des Datenaustausches. Auch ist bei einem Austausch der Baugruppe eine Änderung der Programmierung der Steuerung nicht erforderlich, was eine Wartung vereinfacht. Zudem ist bei einem auftretenden Fehler in dem ersten Bussystem eine Rückwirkung auf das zweite Bussystem und somit auf die Steuerung vermieden, sodass etwaige weitere Baugruppen weiter sicher betrieben werden können. Mit anderen Worten ist eine Rückwirkung auf weitere Komponenten des Systems reduziert. Somit ist eine Sicherheit erhöht.

Sofern mehrere Schaltelemente vorhanden sind, insbesondere die beiden mechanischen Schalter und/oder der Halbleiterschalter, ist mittels dieser zweckmäßigerweise eine Schaltgruppe gebildet. Geeigneterweise umfasst die Schaltgruppe sämtliche Stränge der Schalteinheit, also auch die etwaigen weiteren und/oder zusätzlichen Schaltelemente, sodass die Schalteinheit mittels der etwaigen Steuereinheit und der Schaltgruppe gebildet ist, die die einzelnen Schaltelemente aufweist. Geeigneterweise ist die etwaige Sicherung und/oder weitere Sicherungen jeweils ein Bestandteil der Schaltgruppe. Die Schaltgruppe ist zweckmäßigerweise als einzelnes Modul realisiert.

Bei Betrieb des Systems wird mittels des Systems eine Betätigung des Aktors vorgegeben. Sofern die Betätigung in Abhängigkeit eines Prozessparameters erfolgt, wird dies geeigneterweise an die Schalteinheit übermittelt. Falls die Schalteinheit Schaltelemente oder dergleichen aufweist, von denen eines einen Sicherheitslevel größer eines Grenzwerts und das andere einen Sicherheitslevel kleiner als den Grenzwert aufweist, beispielsweise den mechanischen Schalter und den Halbleiterschalter, wird zweckmäßigerweise dasjenige Schaltelement betätigt, das den geringeren Level aufweist, also insbesondere der Halbleiterschalter. Sofern jedoch mittels der Steuerung vorgegeben wird, dass der Aktor aufgrund einer bestimmten Sicherheitsfunktion, beispielsweise STO (safe torque off) betätigt werden soll, wird das Schaltelement mit dem größten Sicherheitslevel oder zumindest das Schaltelement betätigt, dessen Sicherheitslevel größer als der Grenzwert ist, also insbesondere der mechanische Schalter. Hierbei wird zweckmäßigerweise zunächst der Halbleiterschalter und im Anschluss hieran der mechanische Schalter betätigt, sodass ein Ausbilden eines Lichtbogens unterbunden ist.

Die Baugruppe dient der Bereitstellung von funktionaler Sicherheit und ist geeignet, insbesondere vorgesehen und eingerichtet, in einem System eingesetzt zu werden, das zusätzlich eine Steuerung und einen Aktor aufweist. Im Montagezustand ist eine Schalteinheit der Baugruppe in eine elektrische Versorgungsleitung des Aktors eingebracht. Ferner weist die Baugruppe ein Steuergerät auf, mittels dessen die Baugruppe betrieben ist. Die Baugruppe ist ferner geeignet, insbesondere vorgesehen und eingerichtet, signaltechnisch mit der Steuerung verbunden zu werden. Insbesondere umfasst die Steuereinheit hierfür eine geeignete Schaltung, die beispielsweise mittels einer Anzahl an elektrischen und/oder elektronischen Bauteilen realisiert ist. Vorzugsweise ist die Schaltung redundant aufgebaut, wobei vorzugsweise unterschiedliche Hersteller für die einzelnen Bauteile/Komponenten herangezogen werden. Somit ist eine Ausfallsicherheit weiter erhöht. Insbesondere weist das Steuergerät eine Anzahl an Schnittstellen zur signaltechnischen Verbindung mit der Steuerung und/oder weiteren Bestandteilen des Systems auf.

Die Schalteinheit ist geeignet, insbesondere vorgesehen eingerichtet, in eine elektrische Versorgungsleitung eines Aktors eingebracht zu werden. Zudem ist die Schalteinheit ein Bestandteil einer Baugruppe, die der Bereitstellung von funktionaler Sicherheit dient. Vorzugsweise weist die Schalteinheit ein Gehäuse auf, innerhalb derer sämtliche weitere Bestandteile der Schalteinheit angeordnet sind, insbesondere etwaige Schaltelemente und/oder eine Sicherung. Vorzugsweise weist die Schalteinheit eine Steuereinheit auf, die in dem Gehäuse angeordnet ist. Die Steuereinheit ist zweckmäßigerweise redundant aufgebaut und weist vorzugsweise zwei Teile auf. Jedes der Teile ist beispielsweise ein anwendungsspezifischer Schaltkreis (ASIC). Das Gehäuse ist vorzugsweise aus einem Kunststoff oder einem Metall gefertigt und im Montagezustand zweckmäßigerweise elektrisch mit Masse kontaktiert und somit hierfür geeignet, insbesondere vorgesehen und eingerichtet. Somit ist ein Berührschutz realisiert.

Die im Zusammenhang mit dem System erläuterten Weiterbildungen und Vorteile sind sinngemäß auch auf die Baugruppe / Schalteinheit sowie untereinander zu übertragen und umgekehrt.

Nachfolgend werden Ausführungsbeispiele der Erfindung anhand einer Zeichnung näher erläutert. Darin zeigen:
- Fig. 1: eine Prinzipskizze eines Systems mit einer Steuerung und mit einem Aktor sowie mit einer Baugruppe,
- Fig. 2: das System gemäß Figur 1, mit einem weiteren Aktor und einer abgewandelten Schalteinheit der Baugruppe, und
- Fig. 3: das System gemäß Figur 2, mit einer weiteren Schalteinheit.

Einander entsprechende Teile sind in allen Figuren mit den gleichen Bezugszeichen versehen.

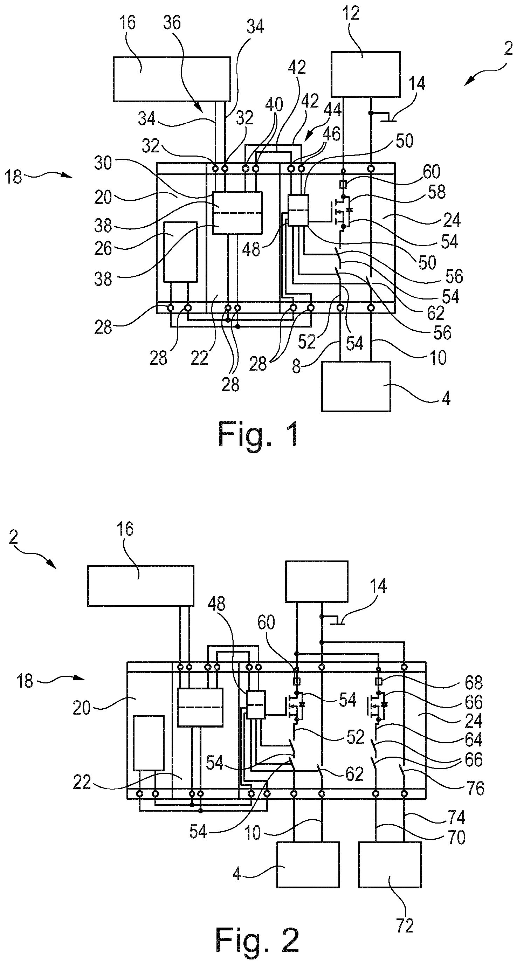

In Figur 1 ist eine Prinzipskizze eines Systems 2 gezeigt, das ein Bestandteil einer nicht näher dargestellten Industrieanlage ist. Das System 2 weist einen Aktor 4 in Form eines elektromechanischen Ventils auf, mittels dessen ein Durchfluss eines Fluides, wie eines Gases oder einer Flüssigkeit, durch ein Rohr geregelt wird. Der Aktor 4 weist eine Versorgungsleitung 8 und eine Masseleitung 10 auf, die elektrisch mit einem Versorgungsnetzwerk 12 kontaktiert sind. In diesem Beispiel ist das Versorgungsnetzwerk 12 mittels eines nicht näher dargestellten Gleichrichters bereitgestellt. Die Masseleitung 10 ist zudem elektrisch gegen Masse 14 geführt. Mittels der Versorgungsleitung 8 sowie der Masseleitung 10 wird jeweils ein konstantes elektrisches Potential geführt, wobei zwischen diesen eine elektrische Spannung von 200 V anliegt.

Ferner weist das System 2 eine Steuerung 16 auf, in der Prozessparameter zur Betätigung des Aktors 4 hinterlegt sind, sodass eine geeignete Steuerung/ Regelung der Fluidzufuhr erfolgt. Die Steuerung 16 ist eine speicherprogrammierbare Steuerung, und mittels dieser erfolgt eine Steuerung und/oder Regelung von weiteren nicht näher dargestellten Komponente der Industrieanlage, wie von weiteren Maschinen und/oder Aktoren, die hier nicht näher gezeigt sind.

Zudem weist das System 2 eine Baugruppe 18 auf, die der Bereitstellung von funktionaler Sicherheit dient. Die Baugruppe 18 weist eine Stromversorgung 20, ein Steuergerät 22 sowie eine Schalteinheit 24 auf, die jeweils als aneinander anreihbare Module ausgestaltet und in einem nicht näher dargestellten Schaltschrank angeordnet sind. Die Schalteinheit 24 ist als separates Bauteil ausgeführt, das von dem Steuergerät 22 für Montage- und/oder Austauschzwecke gelöst werden kann. Die Stromversorgung 20 weist eine Stromquelle 26 auf, mittels derer eine elektrische Gleichspannung von 24 V bereitgestellt ist. Die Stromquelle 26 ist gegen zwei Stromanschlüsse 28 der Stromversorgung 20 geführt, die mit jeweils entsprechenden Stromanschlüssen 28 des Steuergeräts 22 sowie der Schalteinheit 24 elektrisch verbunden sind, sodass eine elektrische Versorgung des Steuergeräts 22 und der Schalteinheit 24 mittels der Stromversorgung 20 erfolgt.

Das Steuergerät 22 weist einen Steuerbaustein 30 auf, der über den Stromanschluss 28 elektrisch versorgt ist. Ferner ist der Steuerbaustein 30 über zwei zweite Anschlüsse 32 des Steuergeräts 22 über jeweils eine zweite Busleitung 34 eines zweiten Bussystems 36 mit der Steuerung 16 signaltechnisch verbunden. Aufgrund der beiden zweiten Busleitungen 34 und der beiden zweiten Anschlüsse 32 ist eine Redundanz bereitgestellt. Das zweite Bussystem 36 genügt dem Profisafe- oder Safety over IO Link-Standard, und die Steuerung 16 ist als der Master des zweiten Bussystems 36 konfiguriert. Das Steuergerät 22, insbesondere der Steuerbaustein 30 ist als ein Slave des zweiten Bussystems 36 konfiguriert. Sofern mehrere derartige Baugruppen 18 vorhanden sind, ist jedes Steuergerät 22 jeweils als ein Slave des zweiten Bussystems 36 konfiguriert.

Zur Bereitstellung einer Ausfallsicherheit weist der Steuerbaustein 30 zwei Unterbereiche 38 auf, die die gleichen Funktionen erfüllen, jedoch mittels einer zueinander unterschiedlichen Schaltung bereitgestellt sind. Mit anderen Worten ist auch der Steuerbaustein 30 redundant ausgestaltet. Der Steuerbaustein 30 ist mittels zweier erster Anschlüsse 40 über jeweils eine dort zugeordnete erste Busleitung 48 eines ersten Bussystems 44 mit entsprechenden Anschlüssen 46 der Schalteinheit 24 verbunden. Somit ist auch hier eine redundant signaltechnische Verbindung zwischen dem Steuergerät 22 und der Schalteinheit 24 realisiert. Mit den Anschlüssen 46 ist eine Steuereinheit 48 signaltechnisch verbunden, die zwei Teile 50 aufweist. Die beiden Teile 50 führen bei Betrieb die gleichen Funktionen aus, sodass auch die Steuereinheit 48 redundant aufgebaut ist. Die Bestromung der Steuereinheit 48 erfolgt mittels der Stromanschlüsse 48.

Zusammenfassend ist das Steuergerät 22, nämlich der Steuerbaustein 30, und die Schalteinheit 24, nämlich die Steuereinheit 48 signaltechnisch mittels des ersten Bussystems 44 verbunden, das gemäß dem Profisafe- oder Safety over IO Link-Standard betrieben ist. Hierbei ist das Steuergerät 22 als Master und die Schalteinheit 24 als Slave des ersten Bussystems 44 konfiguriert. Mit anderen Worten wird die Kommunikation in dem ersten Bussystem 44 mittels des Steuergeräts 22 vorgegeben. Das erste Bussystem 44 ist hierbei unabhängig von dem zweiten Bussystem 36, und der Schalteinheit 24 ist keine Adresse in dem zweiten Bussystem 36 zugewiesen.

Die Schalteinheit 24 weist einen Strang 52 auf, der in die Versorgungsleitung 8 eingebracht ist. Mit anderen Worten wird bei Betrieb mittels des Strangs 52 ein Teil der elektrischen Energie von dem Versorgungsnetzwerk 12 zu dem Aktor 4 geführt, und die Schalteinheit 24 ist in die Versorgungsleitung 8 eingebracht. Der Strang 52 weist insgesamt drei Schaltelemente 54 auf, die elektrisch in Reihe geschaltet sind. Zwei der Schaltelemente 54 sind als ein mechanischer Schalter 56 ausgestaltet. Der mechanische Schalter 56 ist ein Schütz. Das verbleibende Schaltelement 54 ist ein Halbleiterschalter 58 in Form eines MOSFETs. Der Halbleiterschalter 58 wirkt zudem als Strombegrenzung. Bei Überschreiten eines elektrischen Stroms von 10 A nimmt der ohmsche Widerstand des Halbleiterschalters 58 zu, sodass der elektrische Strom nicht weiter zunehmen kann. Somit erfolgt mittels des Halbleiterschalters 58 eine Absicherung des Aktors 4 sowie weitere Bestandteile der Schalteinheit 24. Zusammenfassend sind die Schaltelemente 54 in die Versorgungsleitung 8 eingebracht und elektrisch in Reihe geschaltet.

Die Schaltelemente 54 sind hierbei mittels der Steuereinheit 48 betätigt. Hierfür wird mittels der Steuereinheit 48 eine jeweilige elektrische Versorgungsspannung an die Schaltelemente 54 angelegt, sodass diese sich in dem elektrisch leitenden oder in dem elektrisch nicht leitenden Zustand befinden. Zudem sind die Schaltelemente 54 derart ausgestaltet, dass mittels Anlegen einer elektrischen Spannung an diese abfragbar ist, in welchem Schaltzustand sich diese befinden. Der Zustand der Schaltelemente 54 wird ebenfalls mittels der Steuereinheit 48 abgefragt.

Ferner ist in den Strang 52 eine Sicherung 60 eingebracht, die somit elektrisch in Reihe mit den Schaltelementen 54 geschaltet ist. Die Sicherung 60 ist als Glasrohrsicherung ausgestaltet. Die Sicherung 60 dient als endgültige Absicherung, falls beispielsweise ein Fehler in der Steuereinheit 48, dem Halbleiterschalter 58, der als Strombegrenzung wirkt, oder sonstigen Bestandteilen der Schalteinheit 24 auftritt. Bei Auslösen der Sicherung 60 wird diese zerstört und somit der Strang 52 aufgetrennt. Infolgedessen wird eine elektrische Stromzufuhr zu dem Aktor 4 von dem Versorgungsnetzwerk 12 unterbrochen.

Die Masseleitung 10 verläuft ebenfalls durch die Schalteinheit 24, die somit in die Masseleitung 10 des Aktors 4 eingebracht ist. Ein zusätzliches Schaltelement 62, das in diesem Beispiel als mechanischer Schalter ausgestaltet ist, nämlich als Schütz, ist in die Masseleitung 10 eingebracht, sodass diese ebenfalls unterbrechbar ist. Auch das zusätzliche Schaltelement 62 ist mittels der Steuereinheit 48 betätigt, wobei zudem der Zustand des zusätzlichen Schaltelements 62 abgefragt werden kann.

Bei Betrieb wird von der Steuerung 16 über das zweite Bussystem 36 zu dem Steuergerät 22 der Baugruppe 18 eine Anfrage zur Betätigung des Aktors 4 übermittelt. Hierfür wird ein sicheres Protokoll verwendet, und die Anfrage ist aufgrund der Ausführung einer sicheren Funktion, nämlich zum Beispiel STO ("safe torque off") erstellt worden. Die Anfrage wird mittels des Steuerbausteins 30 bearbeitet und zunächst verifiziert. Anschließend wird hieraus abgeleitet, welches der Schaltelemente 54 betätigt werden soll. Auch wird überprüft, ob das zusätzliche Schaltelement 62 betätigt werden soll. Wenn der Aktor 4 von dem Versorgungsnetzwerk 12 getrennt werden soll, wird über das zweite Bussystem zu der Steuereinheit 48 der Befehl übertragen, zunächst den Halbleiterschalter 58 und im Anschluss hieran die mechanische Schalter 56 des Strangs 52 zu betätigen. Im Anschluss hieran soll das zusätzliche Schaltelement 62 betätigt werden. Die entsprechende Aufforderung wird mittels der Steuereinheit 48 empfangen und von dieser verifiziert. Im Anschluss hieran wird zunächst der Halbleiterschalter 58 mittels geeigneter Anlegung einer elektrischen Spannung an diesen in den elektrisch nicht leitenden Zustand überführt. Wenn dies geschehen ist, erfolgt ein Öffnen der mechanische Schalter 56 mittels der Steuereinheit 48, wofür eine geeignete elektrische Spannung an diese angelegt wird. Im Anschluss hieran wird das zusätzliche Schaltelement 62 betätigt und somit auch die Masseleitung 10 aufgetrennt. Infolgedessen ist der Aktor 4 vollständig galvanisch von dem Versorgungsnetzwerk 12 getrennt. Aufgrund der Reihenfolge entsteht bei den mechanischen Schaltern 56 und auch bei dem zusätzlichen Schaltelement 62 kein elektrischer Lichtbogen, weswegen eine vergleichsweise große Anzahl an Schaltvorgängen durchgeführt werden kann.

Sofern die Prozessparameter vorsehen, dass der Aktor 4 bestromt wird, wird mittels der Steuerung 16 eine entsprechende Anfrage an das Steuergerät 22 übermittelt. Dort wird die Anfrage zunächst verifiziert, und im Anschluss hieran wird mittels des Steuerbausteins 30 die Aufforderung an die Steuereinheit 48 übermittelt, zunächst das zusätzliche Schaltelement 62 und im Anschluss hieran die mechanische Schalter 56 zu schließen. Im Anschluss hieran soll der Halbleiterschalter 58 in den elektrisch leitenden Zustand überführt werden. Somit ist auch in diesem Fall ein Ausbilden eines Lichtbogens unterbunden, und im Anschluss ist in der Aktor 4 mit dem Versorgungsnetzwerk 12 elektrisch kontaktiert. Somit ist die Schalteinheit 24 mittels des Steuergeräts 22 betrieben.

Ferner weist die Schalteinheit 24 nicht näher dargestellten Sensoren auf, mittels derer der mittels des Strangs 52 geführte elektrische Strom sowie das damit geführte elektrische Potential überwacht wird. Die Sensoren werden mittels der Steuereinheit 48 ausgelesen und sind beispielsweise in die Schaltelemente 54 oder zumindest eines der Schaltelemente 54 integriert oder ein separates Bauteil. Falls der elektrische Strom und/oder das elektrische Potential und/oder eine jeweilige Änderung hiervon größer als ein bestimmter Grenzwert ist, wird zumindest eines der Schaltelemente 54, insbesondere sämtliche der Schaltelemente 54, mittels der Steuereinheit 48 angesteuert, sodass diese in den elektrisch nicht leitenden Zustand überführt werden. Somit wirkt die Schalteinheit 24 auch als Schutzschalter.

Da der Steuerbaustein 30, die Bussysteme 36, 44 sowie die Steuereinheit 48 redundant aufgebaut und mehrere Schaltelemente 54 vorhanden sind, erfüllt die Baugruppe 18 einen bestimmten Sicherheitslevel, wobei die einzelnen Bestandteile der Baugruppe 18 aufeinander abgestimmt sind. Bei Montage ist hierbei lediglich ein vergleichsweise geringer Verkabelungsaufwand erforderlich.

In einer nicht näher dargestellten Variante des in Figur 1 gezeigten Systems 2 ist der Halbleiterschalter 58 und/oder die Sicherung 60 nicht vorhanden.

In Figur 2 ist eine Abwandlung der Baugruppe 18 dargestellt, wobei lediglich die Schalteinheit 24 abgeändert ist. Die Schalteinheit 24 weist einen weiteren Strang 64 auf, der baugleich zu dem Strang 52 ist. So weist der weitere Strang 64 drei weitere Schaltelemente 66 auf, von denen jeweils eines einem der Schaltelemente 54 entspricht, und die entsprechend miteinander elektrisch verschaltet sind. Die weiteren Schaltelemente 66, von denen zwei mechanische Schalter und eines ein Halbleiterschalter in Form eines MOSFETs sind, werden ebenfalls mittels der Steuereinheit 48 betätigt, und mittels dieser wird auch ein Zustand der weiteren Schaltelemente 66 bei Betrieb ausgelesen. Ferner ist in den weiteren Strang 64 eine weitere Sicherung 68 eingebracht, die die gleiche Funktion in dem weiteren Strang 64 erfüllt, wie die Sicherung 60 in dem Strang 52.

Der weitere Strang 64 ist in eine weitere Versorgungsleitung 70 eines weiteren Aktors 72 eingebracht. Der weitere Aktor 72 umfasst ferner eine weitere Masseleitung 74, in die ebenfalls die Schalteinheit 24 eingebracht ist. So weist die Schalteinheit 24 ein weiteres zusätzliches Schaltelement 76 auf, das zu dem zusätzlichen Schaltelements 62 korrespondiert. Die weitere Masseleitung 74 ist gegen Masse 14 geführt und hierfür geeignet mit der Masseleitung 10 kontaktiert. Hierbei ist das weitere zusätzliche Schaltelement 76 zwischen dem weiteren Aktor 72 und der elektrischen Verbindung mit der Masseleitung 10 angeordnet.

Bei Betrieb werden mittels der Steuereinheit 48 in Abhängigkeit von seitens der Steuerung 16 vorgegebenen Anfragen/Befehle auch die weiteren Schaltelemente 66 sowie das weitere zusätzliche Schaltelement 76 betätigt. Auch erfolgt eine Überwachung des mittels des weiteren Strangs 64 sowie der weiteren Masseleitung 74 geführten elektrischen Stroms/des jeweiligen anliegenden elektrischen Potentials.

In einer nicht näher dargestellten Variante des in Figur 2 gezeigten Systems 2 ist die weitere Sicherung 68 nicht vorhanden. Auch ist beispielsweise der weitere Strang 64 frei von Halbleiterschaltern, wobei der Strang 52 den Halbleiterschalter 58 aufweist. In einer weiteren Alternative weist auch der Strang 52 den Halbleiterschalter 58 nicht auf.

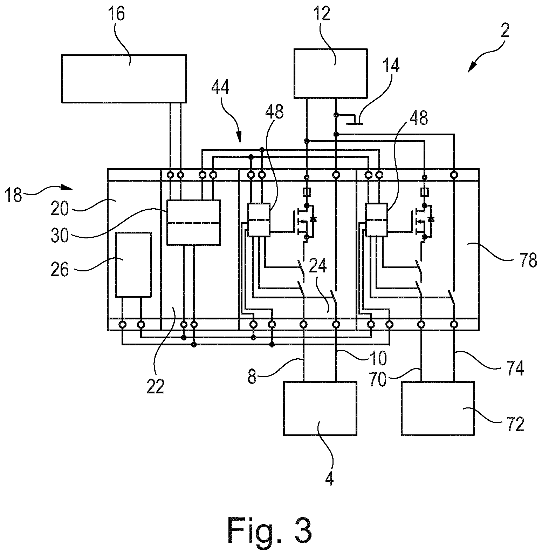

In Figur 3 ist eine weitere Abwandlung des Systems 2 gezeigt, wobei die Baugruppe 18 auf der in Figur 1 gezeigten Ausführungsform aufgebaut. So sind die Schalteinheit 24 sowie die Stromversorgung 20 nicht verändert. Es ist jedoch, ebenso wie bei der in Figur 2 gezeigten Ausführungsform, der weitere Aktor 72 vorhanden, der die weitere Masseleitung 74 sowie die weitere Versorgungsleitung 70 aufweist. Es ist zusätzlich eine weitere Schalteinheit 78 vorhanden, die in gleicher Weise wie die Schalteinheit 24 aufgebaut ist. Jedoch ist die weitere Schalteinheit 78 in die weitere Versorgungsleitung 70 sowie die weitere Masseleitung 74 eingebracht. Die Schalteinheit 24 ist dabei lediglich in die Versorgungsleitung 8 sowie die Masseleitung 10 eingebracht. Somit ist jedem der Aktoren 4, 72 jeweils eine der Schalteinheiten 24, 78 zugeordnet.

Die weitere Schalteinheit 78 ist elektrisch ebenfalls mit der Stromquelle 26 der Baugruppe 18 verbunden und wird somit mittels der Stromversorgung 20 mit elektrischer Energie versorgt. Auch ist das erste Bussystem 44 erweitert, sodass nun beide Schalteinheiten 24, 78 signaltechnisch mit dem Steuergerät 22 verbunden sind. Hierbei sind die beiden Schalteinheiten 24, 78 jeweils als Slave konfiguriert.

Falls mittels der Steuerung 16 eine Anfrage/Befehl zur Änderung des Betriebs der Aktoren 4, 72 erstellt wird, wird diese mittels des Steuergeräts 22 empfangen und dort verifiziert. Im Anschluss hieran wird mittels des Steuerbausteins 30 bestimmt, welche der Schalteinheiten 24, 78 betätigt werden soll. In Abhängigkeit hiervon wird ein entsprechender Befehl, wie bereits zu Figur 1 beschrieben, an die jeweilige Steuereinheit 48 in das erste Bussystem 44 eingespeist. Somit sind in die beiden Schalteinheiten 24, 78 mittels des Steuergeräts 22 betätigt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

### Bezugszeichenliste

- 2: System
- 4: Aktor
- 8: Versorgungsleitung
- 10: Masseleitung
- 12: Versorgungsnetzwerk
- 14: Masse
- 16: Steuerung
- 18: Baugruppe
- 20: Stromversorgung
- 22: Steuergerät
- 24: Schalteinheit
- 26: Stromquelle
- 28: Stromanschluss
- 30: Steuerbaustein
- 32: zweiter Anschluss
- 34: zweite Busleitung
- 36: zweites Bussystem
- 38: Unterbereich
- 40: erster Anschluss
- 42: erste Busleitung
- 44: erstes Bussystem
- 46: Anschluss
- 48: Steuereinheit
- 50: Teil
- 52: Strang
- 54: Schaltelement
- 56: mechanischer Schalter
- 58: Halbleiterschalter
- 60: Sicherung
- 62: zusätzliches Schaltelement
- 64: weiterer Strang
- 66: weiteres Schaltelement
- 68: weitere Sicherung
- 70: weitere Versorgungsleitung
- 72: weiterer Aktor
- 74: weitere Masseleitung
- 76: weiteres zusätzliches Schaltelement
- 78: weitere Schalteinheit

## Patentansprüche

1. System (2) mit einer Steuerung (16) und mit einem Aktor (4) sowie mit einer Baugruppe (18) zur Bereitstellung von funktionaler Sicherheit, wobei die Baugruppe (18) eine in eine elektrische Versorgungsleitung (8) des Aktors (4) eingebrachte Schalteinheit (24) und ein Steuergerät (22) aufweist, das vorgesehen und eingerichtet ist, die Schalteinheit (24) zu betreiben, und
das signaltechnisch mit der Steuerung (16) verbunden ist,
**dadurch gekennzeichnet,**
**dass** in der Steuerung (16) Prozessparameter zur Ansteuerung des Aktors (4) hinterlegt sind, die derart ausgestaltet sind, dass der Aktor (4) eine gewünschte Funktion ausführt, wenn dieser entsprechend der Prozessparameter betrieben wird, wobei das System (2) derart ausgestaltet ist, dass zum Betrieb des Aktors (4) von der Steuerung (16) ein Signal an das Steuergerät (22) der Baugruppe (18) übermittelt wird, mittels dessen die Schalteinheit (24) entsprechend betrieben wird.

2. System (2) nach Anspruch 1,
**dadurch gekennzeichnet,**
**dass** die Schalteinheit (24) eine Anzahl an elektrisch in Reihe geschalteten Schaltelementen (54) aufweist, die in die Versorgungsleitung (8) eingebracht sind.

3. System (2) nach Anspruch 2,
**dadurch gekennzeichnet,**
**dass** zwei der Schaltelemente (54) jeweils ein mechanischer Schalter (56) sind.

4. System (2) nach Anspruch 2 oder 3,
**dadurch gekennzeichnet,**
**dass** eines der Schaltelemente (54) ein Halbleiterschalter (58) ist.

5. System (2) nach einem der Ansprüche 2 bis 4,
**dadurch gekennzeichnet,**
**dass** die Schalteinheit (24) eine Schmelzsicherung (60) aufweist, die elektrisch in Reihe mit den Schaltelementen (54) geschaltet ist.

6. System (2) nach einem der Ansprüche 2 bis 5,
**dadurch gekennzeichnet,**
**dass** die Schalteinheit (24) eine Steuereinheit (48) aufweist, die vorgesehen und eingerichtet ist, die Schaltelemente (54) zu betätigen.

7. System (2) nach einem der Ansprüche 1 bis 6,
**dadurch gekennzeichnet,**
**dass** die Schalteinheit (24) ein zusätzliches Schaltelement (62) aufweist, das in eine Masseleitung (10) des Aktors (4) eingebracht ist.

8. System (2) nach einem der Ansprüche 1 bis 7,
**gekennzeichnet durch** einen weiteren Aktor (72) mit einer weiteren Versorgungsleitung (70), wobei die Schalteinheit (24) eine Anzahl an elektrisch in Reihe geschalteten weiteren Schaltelementen (66) aufweist, die in die weitere Versorgungsleitung (70) eingebracht sind, oder wobei die Baugruppe (18) eine weitere Schalteinheit (78) aufweist, die in die weitere Versorgungsleitung (70) eingebracht und mittels des Steuergeräts (22) betrieben ist.

9. System (2) nach einem der Ansprüche 1 bis 8,
**dadurch gekennzeichnet,**
**dass** das Steuergerät (22) und die Schalteinheit (24) mittels eines ersten Bussystems (44) signaltechnisch verbunden sind, wobei das Steuergerät (22) als ein Master des ersten Bussystems (44) konfiguriert ist.

10. System (2) nach einem der Ansprüche 1 bis 9,
**dadurch gekennzeichnet,**
**dass** das Steuergerät (22) und die Steuerung (16) mittels eines zweiten Bussystems (36) signaltechnisch verbunden sind, wobei das Steuergerät (22) als ein Slave des zweiten Bussystems (36) konfiguriert ist.

## Claims

1. System (2) having a controller (16) and having an actuator (4) and also having an assembly (18) for providing functional safety, wherein the assembly (18) has a switching unit (24) inserted into an electrical supply line (8) of the actuator (4) and a control device (22) which is provided and set up to operate the switching unit (24) and is connected to the controller (16) for signal transfer purposes, **characterized in that** process parameters for controlling the actuator (4) are stored in the controller (16), which process parameters are designed in such a way that the actuator (4) performs a desired function when it is operated in accordance with the process parameters, wherein the system (2) is designed in such a way that, in order for the actuator (4) to be operated by the controller (16), a signal, by means of which the switching unit (24) is accordingly operated, is transmitted to the control device (22) of the assembly (18).

2. System (2) according to Claim 1, **characterized in that** the switching unit (24) has a number of switching elements (54) which are electrically connected in series and are inserted into the supply line (8).

3. System (2) according to Claim 2, **characterized in that** two of the switching elements (54) are each a mechanical switch (56).

4. System (2) according to Claim 2 or 3, **characterized in that** one of the switching elements (54) is a semiconductor switch (58).

5. System (2) according to one of Claims 2 to 4, **characterized in that** the switching unit (24) has a fuse (60) which is electrically connected in series with the switching elements (54).

6. System (2) according to one of Claims 2 to 5, **characterized in that** the switching unit (24) has a control unit (48) which is provided and set up to actuate the switching elements (54).

7. System (2) according to one of Claims 1 to 6, **characterized in that** the switching unit (24) has an additional switching element (62) which is inserted into an earth line (10) of the actuator (4).

8. System (2) according to one of Claims 1 to 7, **characterized by** a further actuator (72) having a further supply line (70), wherein the switching unit (24) has a number of further switching elements (66) which are electrically connected in series and are inserted into the further supply line (70), or wherein the assembly (18) has a further switching unit (78) which is inserted into the further supply line (70) and is operated by means of the control device (22).

9. System (2) according to one of Claims 1 to 8, **characterized in that** the control device (22) and the switching unit (24) are connected by means of a first bus system (44) for signal transfer purposes, wherein the control device (22) is configured as a master of the first bus system (44).

10. System (2) according to one of Claims 1 to 9, **characterized in that** the control device (22) and the controller (16) are connected by means of a second bus system (36) for signal transfer purposes, wherein the control device (22) is configured as a slave of the second bus system (36).

## Revendications

1. Système (2), comprenant un dispositif de commande (16) et un actionneur (4) ainsi qu'un sous-ensemble (18) pour assurer une sécurité fonctionnelle, dans lequel le sous-ensemble (18) présente une unité de commutation (24) insérée dans une ligne d'alimentation électrique (8) de l'actionneur (4) et un appareil de commande (22) qui est prévu et conçu pour faire fonctionner l'unité de commutation (24) et qui est relié en technique de signalisation au dispositif de commande (16),
**caractérisé en ce que** des paramètres de processus pour piloter l'actionneur (4) sont mémorisés dans le dispositif de commande (16) qui sont configurés de telle sorte que l'actionneur (4) effectue une fonction souhaitée lorsque celui-ci fonctionne selon les paramètres de processus, dans lequel le système (2) est configuré de telle sorte que pour faire fonctionner l'actionneur (4), le dispositif de commande (16) transmet à l'appareil de commande (22) du sous-ensemble (18) un signal au moyen duquel l'unité de commutation (24) fonctionne de façon correspondante.

2. Système (2) selon la revendication 1, **caractérisé en ce que** l'unité de commutation (24) présente un nombre donné d'éléments de commutation (54) connectés électriquement en série et qui sont insérés dans la ligne d'alimentation (8).

3. Système (2) selon la revendication 2, **caractérisé en ce que** deux des éléments de commutation (54) sont respectivement un commutateur mécanique (56).

4. Système (2) selon la revendication 2 ou 3, **caractérisé en ce que** l'un des éléments de commutation (54) est un commutateur à semi-conducteur (58).

5. Système (2) selon l'une quelconque des revendications 2 à 4, **caractérisé en ce que** l'unité de commutation (24) présente un fusible de sécurité (60) qui est connecté électriquement en série avec les éléments de commutation (54).

6. Système (2) selon l'une quelconque des revendications 2 à 5, **caractérisé en ce que** l'unité de commutation (24) présente une unité de commande (48) qui est prévue et conçue pour actionner les éléments de commutation (54).

7. Système (2) selon l'une quelconque des revendications 1 à 6, **caractérisé en ce que** l'unité de commutation (24) présente un élément de commutation (62) supplémentaire qui est inséré dans une ligne de masse (10) de l'actionneur (4).

8. Système (2) selon l'une quelconque des revendications 1 à 7, **caractérisé par** un actionneur supplémentaire (72) pourvu d'une ligne d'alimentation supplémentaire (70), dans lequel l'unité de commutation (24) présente un nombre donné d'éléments de commutation supplémentaires (66) connectés électriquement en série qui sont insérés dans la ligne d'alimentation supplémentaire (70), ou dans lequel le sous-ensemble (18) présente une unité de commutation supplémentaire (78) qui est insérée dans la ligne d'alimentation supplémentaire (70) et fonctionne au moyen de l'appareil de commande (22).

9. Système (2) selon l'une quelconque des revendications 1 à 8, **caractérisé en ce que** l'appareil de commande (22) et l'unité de commutation (24) sont reliés en technique de signalisation au moyen d'un premier système de bus (44), dans lequel l'appareil de commande (22) est configuré en tant que maître du premier système de bus (44).

10. Système (2) selon l'une quelconque des revendications 1 à 9, **caractérisé en ce que** l'appareil de commande (22) et le dispositif de commande (16) sont reliés en technique de signalisation au moyen d'un deuxième système de bus (36), dans lequel l'appareil de commande (22) est configuré en tant qu'esclave du deuxième système de bus (36).
